# EUROPEAN PATENT APPLICATION

(11) **EP 2 498 123 A1**
(43) Date of publication of application: **12.09.2012**
(21) Application number: 10835958.9
(22) Date of filing: 07.12.2010
(51) Int. Cl.: G02F 1/1335, G02F 1/1333, G02F 1/135, G06F 3/041, G06F 3/042, G09F 9/30

(54) **DISPLAY DEVICE**

(30) Priority: 09.12.2009 JP 2009279688
(71) Applicant: Sharp Kabushiki Kaisha, Osaka-shi, Osaka 545-8522 (JP)
(72) Inventor: YUKI, Ryuzo, Osaka-shi, Osaka 545-8522 (JP); USUKURA, Naru, Osaka-shi, Osaka 545-8522 (JP)
(74) Representative: Müller - Hoffmann & Partner
(86) International application number: PCT/JP2010/071899
(87) International publication number: WO 2011/071038

(57) **Abstract**

Decrease in resolution is minimized even in a photosensor including a plurality of receivers. In a photosensor-equipped display device including a plurality of photosensor assemblies in a display region that displays an image, each of the photosensor assemblies includes: a plurality of sensor apertures (18a-18c) that allow light to enter the display device through a display surface for the image in the display region; and a plurality of light receivers (D1-D3) provided below the respective sensor apertures (18a-18c) for receiving light entering the display device through the sensor apertures (18a-18c) and converting the light into an electric signal, and the plurality of sensor apertures (18a-18c) and the plurality of light receivers (D1-D3) are arranged in at least one direction, and at least one (18a, 18c) of the plurality of sensor apertures (18a-18c) that is located outward is displaced inward relative to at least one of the light receivers (D1-D3) that is located below that at least one sensor aperture.

## Description

### TECHNICAL FIELD

The present invention relates to a display device having a photosensor such as a photodiode or a phototransistor.

### BACKGROUND ART

Photosensor-equipped display devices have been proposed that include, in a pixel, a light detection element such as a photodiode that is capable of measuring the brightness of external light or capturing an image of an object located close to the display, for example. In such a photosensor-equipped display device, for example, at least one light detection element is provided as a light receiver for each pixel. In such a photosensor-equipped display device where one or more light detection elements are provided for each pixel, providing two or more light detection elements as one sensor unit has been proposed in order to ensure sufficient electric signals to allow an object located close to the display to be detected (see, for example, JP2001-320547A, JP2004-45875A, JP2008-97171A, and JP2008-262204A).

### DISCLOSURE OF THE INVENTION

However, if two or more light detection elements work as one photosensor unit, the light reception area per photosensor unit is larger than if one light detection element would work as one photosensor unit. This may reduce resolution. As a result, resolution of a captured image may decrease and a failure in recognizing a touch location may occur.

In view of this, an object of the present invention is to reduce the decrease in resolution for a photosensor including a plurality of receivers.

A display device of the present invention is a photosensor-equipped display device including a plurality of photosensor assemblies in a display region that displays an image, wherein each of the photosensor assemblies includes: a plurality of sensor apertures that allow light to enter the display device through a display surface for the image; and a plurality of light receivers provided below the respective sensor apertures for receiving light entering the display device through the sensor apertures and converting the light into an electric signal, and the plurality of sensor apertures and the plurality of light receivers are arranged in at least one direction, and at least one of the plurality of sensor apertures that is located outward along the display region is displaced inward along the display region relative to at least one of the light receivers that is located below that at least one sensor aperture.

The display device of the present invention will reduce the decrease in resolution for a photosensor including a plurality of light receivers.

### BRIEF DESCRIPTION OF THE DRAWINGS

[FIG. 1] Fig. 1 is a block diagram that schematically shows a TFT substrate included in a liquid crystal display device according to a first embodiment.
[FIG. 2] FIG. 2 is an equivalent circuit diagram that illustrates how a pixel and a photosensor assembly in a pixel region of the TFT substrate are disposed.
[FIG. 3] FIG. 3 shows an exemplary timing chart of operation of the liquid crystal display device.
[FIG. 4A] FIG. 4A is a plan view of an area of the pixel region 1 of the liquid crystal display device according to the first embodiment, including one photosensor unit.
[FIG. 4B] FIG. 4B is a cross sectional view of the photosensor unit along line X2-X'2 of FIG. 4A.
[FIG. 4C] FIG. 4C is a cross sectional view of the photosensor unit along line Y2-Y'2 of FIG. 4A.
[FIG. 5A] FIG. 5A illustrates the light reception area of one photosensor assembly and the light reception area of one light receiver in that photosensor assembly.
[FIG. 5B] FIG. 5B illustrates the light reception area of one photosensor assembly and the light reception area of one light receiver in that photosensor assembly.
[FIG. 6] FIG. 6 is a cross sectional view of the display device illustrating a set of sensor apertures and a set of light receivers according to the first embodiment.
[FIG. 7] FIG. 7 is a cross sectional view of the display device illustrating an implementation where the outer sensor apertures are not shifted inward.
[FIG. 8] FIG. 8 is a cross sectional view of another implementation illustrating a set of sensor apertures and a set of light receivers according to the first embodiment.
[FIG. 9] FIG. 9 is a cross sectional view of a photosensor-incorporating liquid crystal display device according to a second embodiment, illustrating a set of light receivers and a set of sensor apertures.
[FIG. 10] FIG. 10 is a cross sectional view of an implementation where the outer sensor apertures are not shifted inward.
[FIG. 11] FIG. 11 is a cross sectional view of a photosensor-incorporating liquid crystal display device according to a third embodiment, illustrating a set of light receivers and a set of sensor apertures.
[FIG. 12] FIG. 12 is a cross sectional view of an implementation where the edges of the sensor aperture are not shifted inward relative to the outer edges of photodiodes.

### EMBODIMENTS FOR CARRYING OUT THE INVENTION

A display device according to an embodiment of the present invention is a photosensor-equipped display device including a plurality of photosensor assemblies in a display region that displays an image, wherein: each of the photosensor assemblies includes: a plurality of sensor apertures that allow light to enter the display device through a display surface for the image; and a plurality of light receivers provided below the respective sensor apertures for receiving light entering the display device through the sensor apertures and converting the light into an electric signal, and the plurality of sensor apertures and the plurality of light receivers are arranged in at least one direction, and at least one of the plurality of sensor apertures that is located outward along the display region is displaced inward along the display region relative to at least one of the light receivers that is located below that at least one sensor aperture (first arrangement).

In the first arrangement, at least one of the sensor apertures arranged in a row that is located outward along the display region may be displaced inward along the display device relative to the receiver provided below that sensor aperture. Thus, the area of incident light to be received by the outer receiver(s) through the display surface may also be displaced inward. Consequently, the area of incident light to be received by the outer receiver(s) and the area of incident light to be received by the other receiver(s), located around the center, may have a larger overlapping area. That is, the difference between the area of light to be captured by one photosensor assembly and the area of light to be detected by one receiver in the one photosensor assembly may be reduced. As a result, unnecessary light entering the sensors may be minimized, eventually improving resolution.

A second arrangement provides that, in the first arrangement, the light receivers are arranged in at least one direction with a pitch equivalent to that of a plurality of subpixels provided in the display region, and the sensor apertures are arranged with a pitch smaller than that of the receivers.

A third arrangement provides that, in the first arrangement, the sensor apertures are arranged in at least one direction with a pitch equivalent to that of a plurality of subpixels provided in the display region, and the light receivers are arranged with a pitch larger than that of the sensor apertures.

A display device according to another embodiment of the present invention is a photosensor-equipped display device including a plurality of photosensor assemblies in a display region that displays an image, wherein: each of the photosensor assemblies includes: a sensor aperture that allows light to enter the display device through a display surface for the image; and a plurality of light receivers provided below the sensor aperture for receiving light entering the display device through the sensor aperture and converting the light into an electric signal, and the plurality of receivers are arranged in at least one direction, and an edge of the sensor aperture as viewed along the direction in which the light receivers are arranged is displaced inward along the display region relative to an edge located outward along the display region of at least one of the light receivers that is located outermost in the one direction (fourth arrangement).

In the fourth arrangement, an edge of a sensor aperture as viewed along the direction in which the light receivers are arranged may be displaced inward along the display region relative to the edge located outward along the display region of the one of the light receivers that is located outermost in one direction. Thus, the area of incident light to be received by the outer receiver through the display surface may be displaced inward. Consequently, the difference between the area of light to be captured by one photosensor assembly and the area of light to be detected by one receiver in one photosensor assembly may be reduced. As a result, unnecessary light entering the sensors may be minimized, eventually improving resolution.

A fifth arrangement, in any one of the first to fourth arrangements, further includes a metal layer provided between the display surface and the light receivers, wherein the sensor apertures are formed in the metal layer. In this arrangement, the sensor apertures may be located closer to the light receivers. As a result, noise light entering the light receivers may be minimized.

A sixth arrangement, in any one of the first to fifth arrangements, further includes: a light source provided opposite the display surface; and a shielding unit provided between the light receivers and the light source for preventing light from the light source from directly reaching the light receivers.

A seventh arrangement, in any one of the first to sixth arrangements, further includes: a display light source that emits light for image display; and a sensor light source that emits light in a sensor wavelength range that is different from a wavelength range of light emitted by the display light source, wherein a filter that passes light in the sensor wavelength range is provided on a path from each of the sensor apertures to each of the light receivers.

An eighth arrangement, in any one of the first to seventh arrangements, includes: a first substrate having a pixel circuit; a liquid crystal layer; and a second substrate on a side of the liquid crystal layer opposite the first substrate, where the light receivers are provided on the first substrate.

A display device according to yet another embodiment of the present invention is a photosensor-equipped display device including a plurality of photosensor assemblies in a display region that displays an image, wherein: each of the photosensor assemblies includes: a plurality of sensor apertures that allow light to enter the display device through a display surface for the image; and a plurality of light receivers provided below the respective sensor apertures for receiving light entering the display device through the sensor apertures and converting the light into an electric signal, and the sensor apertures and the light receivers are arranged such that the light receivers included in each of the photosensor assemblies receive incident light in an identical area of the display surface (ninth arrangement).

More specific embodiments of the present invention will now be described with reference to the drawings. The following embodiments illustrate the display device of the present invention implemented as a liquid crystal display device. The display device of the present invention can be utilized as a touch panel-equipped display device that includes photosensor assemblies for detecting an object located close to the screen to effect an input operation, or as a bidirectional communication display device including display and pickup functionality, or the like.

For purposes of explanation, the drawings referred to below schematically show those of the components of the embodiments of the present invention that are necessary to describe the present invention. As such, a display device of the present invention may include an optional component that is not shown in the drawings referred to herein. Further, the sizes of the components in the drawings do not exactly represent the sizes of the actual components or the size ratios of the components.

### First Embodiment

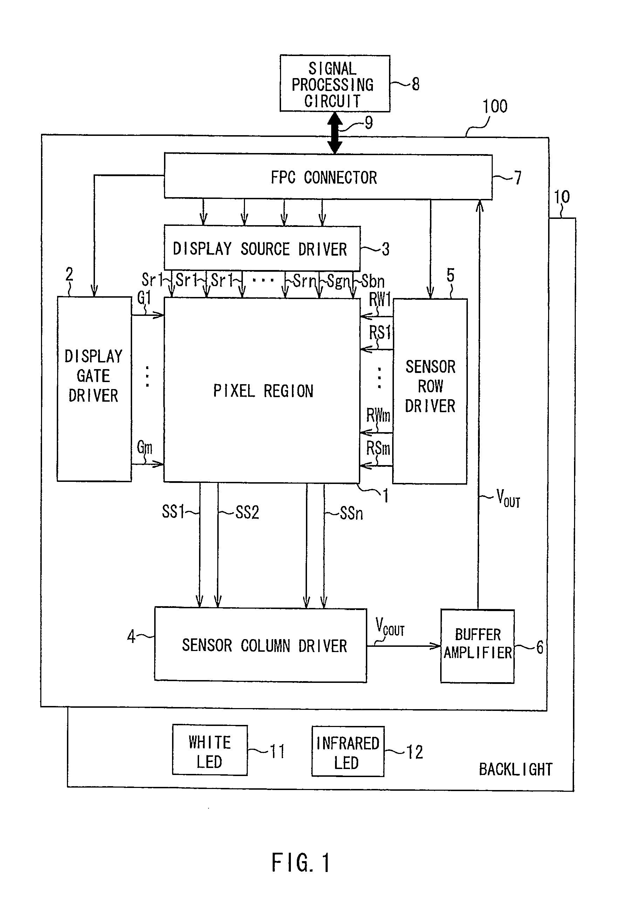

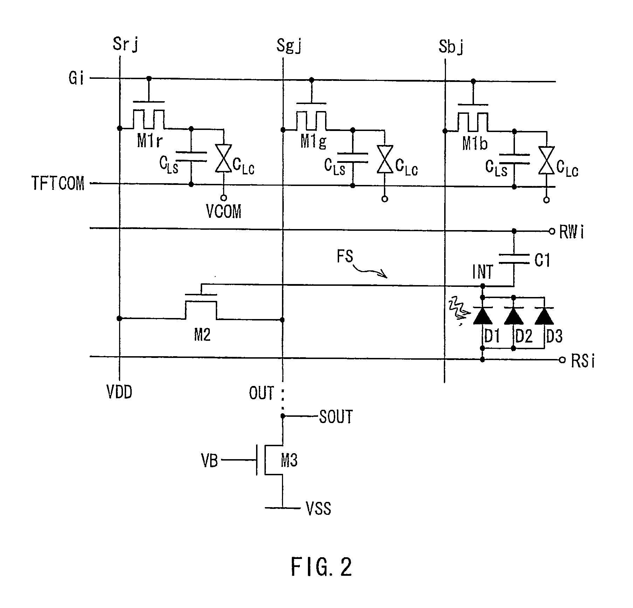

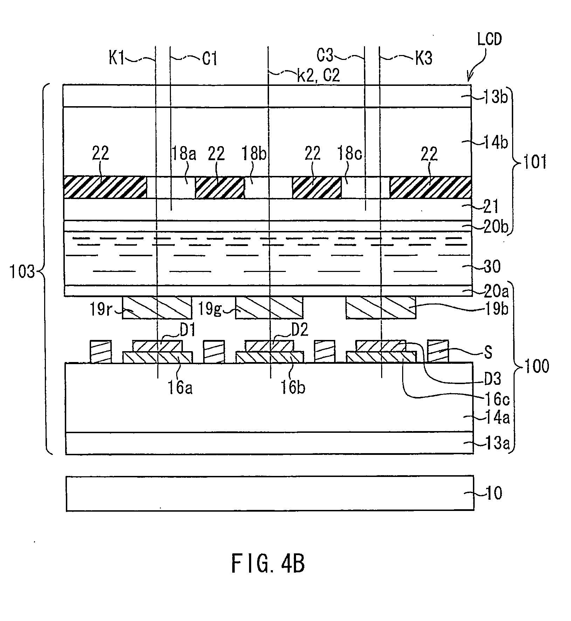

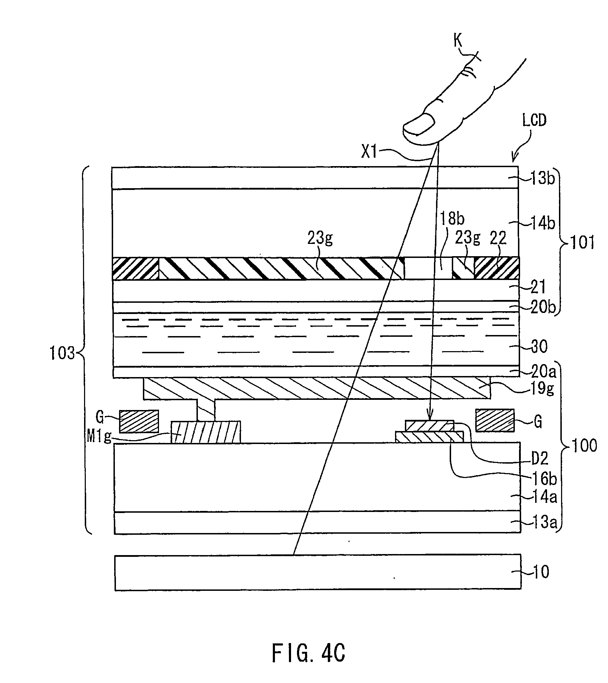

Referring first to FIGS. 1 and 2, the configuration of a TFT substrate 100 included in a photosensor-incorporating liquid crystal display device LCD (see FIGS. 4B and 4C) as a display device according to a first embodiment of the present invention will be described.

### [Configuration of TFT Substrate]

Fig. 1 is a block diagram that schematically shows a TFT substrate 100 included in a liquid crystal display device LCD. As shown in FIG. 1, the TFT substrate 100 at least includes, on a glass substrate, a pixel region 1, a display gate driver 2, a display source driver 3, a sensor column driver 4, a sensor row driver 5, a buffer amplifier 6, and an FPC connector 7. Further, a signal processing circuit 8 for processing an image signal received by a plurality of photosensor assemblies FS (see FIG. 2), described later, provided in the pixel region 1 is connected to the TFT substrate 100 via the FPC connector 7 and an FPC 9.

The pixel region 1 is a region where a pixel circuit containing a plurality of pixels for displaying an image are formed. The pixel region 1 provides a display region for displaying an image. In the present embodiment, a plurality of photosensor assemblies FS for capturing an image are each provided in one of the pixels in the pixel circuit. The pixel circuit is connected to the display gate driver 2 via m gate lines G1 to Gm. The pixel circuit is connected to the display source driver 3 via 3n source lines Sr1 to Srn, Sg1 to Sgn and Sb1 to Sbn. The pixel circuit is connected to the sensor row driver 5 via m reset signal lines RS1 to RSm and m readout signal lines RW1 to RWm. The pixel circuit is connected to the sensor column driver 4 via n sensor output lines SS1 to SSn.

It should be noted that such components on the TFT substrate 100 may also be formed monolithically on the glass substrate using a semiconductor process. Alternatively, such an amplifier or such drivers may be mounted on the glass substrate using, for example, COG (chip on glass) techniques. Still alternatively, at least one of such components on the TFT substrate 100 as shown in FIG. 1 may be mounted on the FPC 9. The TFT substrate 100 is attached to a counter substrate 101 (see FIGS. 4B and 4C), described later, the entire surface of which has a common electrode 21 (see FIGS. 4B and 4C) formed thereon. Liquid crystal material is enclosed between the TFT substrate 100 and the counter substrate.

A backlight 10 is provided on the backside of the TFT substrate 100. The backlight 10 includes white light emitting diodes (LEDs) 11 that emit white light (visible light) and infrared LEDs 12 that emit infrared light (infrared radiation). As an example, in the present embodiment, the infrared LEDs 12 may be used as light emitters that emit light in the signal light wavelength range (sensor wavelength range) of the photosensor assemblies FS. The white LEDs 11 may be used as light emitters that emit light for display. It should be noted that the light emitters of the backlight 10 are not limited to the above examples. For example, the emitters of visible light may be implemented by a combination of red LEDs, green LEDs and blue LEDs. Alternatively, the LEDs may be replaced by cold cathode fluorescent lamps (CCFLs). The signal light wavelength range of the photosensor assemblies FS may be a visible light wavelength range and the backlight 10 may only include white LEDs.

### [Configuration of Display Circuit]

FIG. 2 is an equivalent circuit diagram that illustrates how a pixel and a photosensor assembly FS in a pixel region 1 on the TFT substrate 100 are disposed. In the implementation of FIG. 2, one pixel is composed of three subpixels of different colors, i.e. red (R), green (G) and blue (B). One photosensor assembly FS is provided in one such pixel composed of three subpixels. The pixel represents a unit in display resolution. The pixel region 1 includes pixels arranged in a matrix of m rows and n columns as well as photosensor assemblies FS, again arranged in a matrix of m rows and n columns. As described above, the number of subpixels is mx3n.

Thus, as shown in FIG. 2, the pixel region 1 includes gate lines G and source lines Sr, Sg and Sb arranged in a grid, provided as lines for pixels. The gate lines G are connected to the display gate driver 2. The source lines Sr, Sg and Sb are connected to the display source driver 3. It should be noted that m gate lines G are provided in the pixel region 1. The gate lines G are hereinafter referred to as Gi (i=1 to m) when they are to be mentioned separately. As discussed above, three source lines, Sr, Sg and Sb, are provided for one pixel to supply image data to the three subpixels of this one pixel. The source lines Sr, Sg and Sb are referred to as Srj, Sgj and Sbj (j=1 to n) when they are to be mentioned separately.

For a given pixel, a thin-film transistor (TFT) M1 is provided as a switching device for the pixel at the intersection between the gate line G and each of the source lines Sr, Sg and Sb. In FIG. 2, the thin-film transistors M1 provided for the red, green and blue subpixels are labeled M1r, M1g and M1b, respectively. The gate electrode of each thin-film transistor M1 is connected to the gate line G. The source electrode of each thin-film transistor M1 is connected to the corresponding source line S. The drain electrode of the thin-film transistor M1 is connected to a pixel electrode, not shown. Thus, as shown in FIG. 2, a liquid crystal capacitance C_{LC} is formed between the drain electrode of a thin-film transistor M1 and the common electrode (VCOM). Further, an auxiliary capacitance C_{LS} is formed between the drain electrode and TFTCOM.

In FIG. 2, the subpixel driven by the thin-film transistor M1r connected at the intersection between the gate line Gi and the source line Srj has a red color filter, which corresponds to this subpixel. The subpixel driven by the thin-film transistor M1r functions as a red subpixel as it is supplied with red image data from the display source driver 3 via the source line Srj. The subpixel driven by the thin-film transistor M1g connected at the intersection between the gate line Gi and the source line Sgj has a green color filter, which corresponds to this subpixel. The subpixel driven by the thin-film transistor M1g functions as a green subpixel as it is supplied with green image data from the display source driver 3 via the source line Sgj. The subpixel driven by the thin-film transistor M1b connected at the intersection between the gate line Gi and the source line Sbj has a blue color filter, which corresponds to this subpixel. The subpixel driven by the thin-film transistor M1b functions as a blue subpixel as it is supplied with blue image data from the display source driver 3 via the source line Sbj.

In the implementation of FIG. 2, in the pixel region 1, one photosensor assembly FS is provided for one pixel (i.e. three subpixels). That is, one pixel provides one photosensor unit. In the present embodiment, the photosensor assembly FS includes a plurality of receivers, each provided for one subpixel. Light that enters the display device through one of the sensor apertures, each provided for a receiver, is detected by the receiver and converted into an electric signal. It should be noted that the relationship between the number of pixels and that of photosensor assemblies is not limited to this example and can be determined as desired. For example, one photosensor assembly may be provided for one subpixel, or one photosensor assembly may be provided for a plurality of pixels.

### [Configuration of Photosensor Circuit]

As shown in FIG. 2, the photosensor assembly FS includes photodiodes D1, D2 and D3 which exemplify light receivers, a capacitor C1, and a transistor M2 which exemplifies a switching device. Although not shown in FIG. 2, the photosensor assembly FS includes sensor apertures 18a, 18b and 18c (see FIG. 4B).

The photodiodes D1, D2 and D3 are provided in locations that correspond to red, green and blue subpixels, respectively. The sensor apertures 18a, 18b and 18c (see FIG. 4B) are provided above the photodiodes D1, D2 and D3, respectively. The photodiodes D1, D2 and D3 receive light entering the display device through the respective sensor apertures 18a, 18b and 18c. The photodiodes D1, D2 and D3 are connected in parallel. The anodes of the photodiodes D1, D2 and D3 are connected to the reset signal line RS that supplies a reset signal. The cathodes of the photodiodes D1, D2 and D3 are connected to the gate of the transistor M2.

The node on the lines that connects the photodiodes D1, D2 and D3 with the gate of the transistor M2 is referred to as a storage node INT herein. The storage node INT is further connected to one electrode of the capacitor C1. The other electrode of the capacitor C1 is connected to the readout signal line RW that supplies a readout signal. The drain of the transistor M2 is connected to the line VDD. The source of the transistor M2 is connected to the line OUT. The line VDD supplies a constant voltage V_{DD} to the photosensor assemblies. The line OUT exemplifies an output line that outputs an output signal of the photosensor assemblies FS.

In the circuit configuration shown in FIG. 2, a reset signal is supplied from the reset signal line RS to initialize the potential V_{INT} of the storage node INT. Once the reset signal is supplied, the photodiodes D1, D2 and D3 are reverse-biased. When a readout signal is supplied from the readout signal line RW to the storage node INT via the capacitor C1, the potential V_{INT} of the storage node INT is pulled up. Thus, the transistor M2 becomes conductive. As a result, an output signal corresponding to the potential V_{INT} of the storage node INT is output to the line OUT. In this implementation, a current corresponding to the amount of received light flows into the photodiodes D1, D2 and D3 during the period between the point where supply of reset signals is stopped and the point where supply of readout signals begins (integration period). Then, a charge corresponding to this current flows out of the capacitor C1. Thus, when a readout signal is supplied, the potential V_{INT} of the storage node INT varies depending on the current that flows into the photodiodes D1, D2 and D3. An output signal that corresponds to the voltage V_{INT} of the storage node INT is output to the line OUT. As a result, the output signal reflects the amount of received light at the photodiodes D1, D2 and D3. It should be noted that the sensor circuit is not limited to the above implementation.

In the implementation shown in FIG. 2, a source line Sr also serves as the line VDD that supplies the photosensors assembly FS with the constant voltage V_{DD} from the sensor column driver 4. A source line Sg also serves as the line OUT for sensor output. The reset signal line RS and the readout signal line RW are connected to the sensor row driver 5. One reset signal line RS and one readout signal line RW are provided for each line; they are hereinafter referred to as RSi and RWi (i=1 to m) when these lines are to be mentioned separately.

The sensor row driver 5 selects in sequence a reset signal line RSi and a readout signal line RWi shown in FIG. 2 at a predetermined time interval t_{row}. Thus, each of the rows of the photosensor assemblies FS to be read for a signal charge in the pixel region 1 is selected in sequence.

As shown in FIG. 2, an end of the line OUT is connected to the drain of the transistor M3. The transistor M3 may be an insulated gate field-effect transistor, for example. The drain of the transistor M3 is connected to the output line SOUT. Thus, the potential V_{SOUT} of the drain of the transistor M3 is output to the sensor column driver 4 as an output signal from the photosensor assemblies FS. The source of the transistor M3 is connected to the line VSS. The gate of the transistor M3 is connected to a reference voltage source (not shown) via the reference voltage line VB.

### [Exemplary Operations]

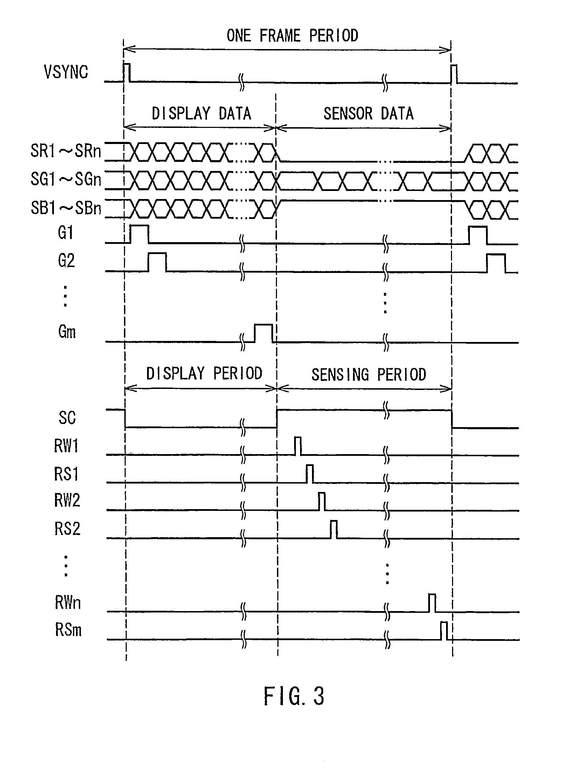

FIG. 3 shows an exemplary timing chart of operation of the liquid crystal display device LCD1. In the implementation shown in FIG. 3, the vertical synchronizing signal VSYNC goes to a high level every frame period. One frame period is divided into a display period and a sensing period. The sense signal SC indicates whether the current period is a display period or a sensing period. The sense signal SC is at a low level during a display period and at a high level during a sensing period.

During a display period, the source lines Sr, Sg and Sb are supplied with a signal of display data from the display source driver 3. During the display period, the display gate driver 2 causes the voltage of each of the gate lines G1 to Gm to go to a high level in sequence. While the voltage on a gate line Gi is at the high level, a voltage corresponding to the gray scale (pixel value) of each of the 3n subpixels connected to that gate line Gi is applied to the source lines Sr1 to Srn, Sg1 to Sgn and Sb1 to Sbn.

During a sensing period, the constant voltage V_{DD} is applied to the source lines Sr1 to Srn. During the sensing period, the sensor row driver 5 selects in sequence a reset signal line RSi and a readout signal line RWi, each at a predetermined time interval t_{row}. A reset signal and readout signal are applied to the selected reset signal line RSi and readout signal line RWi, respectively. A voltage corresponding to the amount of light detected by the n photosensor assemblies FS connected to the selected readout signal line RWi is output to the source lines Sg1 to Sgn.

### [Exemplary Construction of Liquid Crystal Display Device]

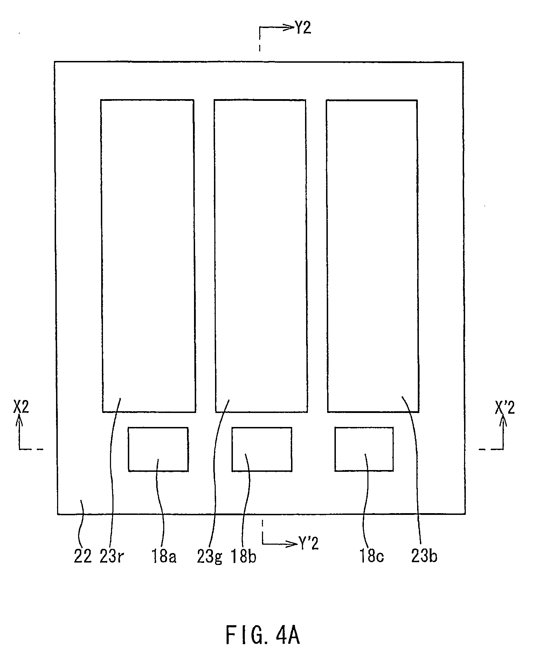

FIG. 4A is a plan view of an area of the pixel region 1 of the liquid crystal display device LCD according to the present embodiment, including one pixel. FIG. 4B is a cross sectional view of the photosensor unit along line X2-X'2 of FIG. 4A, and FIG. 4C is a cross sectional view of the photosensor unit along line Y2-Y'2 of FIG. 4A. As shown in FIGS. 4B and 4C, the liquid crystal display device LCD of the present embodiment includes a liquid crystal panel 103 and a backlight 10. The liquid crystal panel 103 includes a first substrate (TFT substrate 100) on which the pixel circuits are provided, and a second substrate (counter substrate 101) on which the color filters 23r, 23g and 23b are provided, the two substrates being opposite each other and sandwiching the liquid crystal layer 30. In other words, the liquid crystal panel 103 has a liquid crystal layer 30 sandwiched between two glass substrates 14a and 14b for the TFTs and the color filters, respectively. In the present embodiment, the one of the two surfaces of the liquid crystal panel 103 that is closer to the counter substrate 101 provides a front surface, while the surface closer to the TFT substrate 100 provides a back surface. In other words, the one of the two surfaces of the liquid crystal panel 103 that is closer to the counter substrate 101 (front surface) provides an image display surface. The backlight 10 is provided below the back surface of the liquid crystal panel 103. Polarizers 13a and 13b are provided on the back surface and the front surface, respectively, of the liquid crystal panel 103.

The counter substrate 101 has, on the surface of the glass substrate 14b closer to the liquid crystal layer 30, a layer including color filters 23r, 23g and 23b, a black matrix 22 (light-blocking film) and a sensor apertures 18a, 18b and 18c. A common electrode 21 and an oriented film 20b are formed to cover this layer.

Sensor apertures 18a, 18b and 18c are provided in locations corresponding to the color filters 23r, 23g and 23b of the R, G and B subpixels, respectively. The sensor apertures 18a, 18b and 18c allow light in the wavelength range to be detected by the photosensor assembly FS to pass through from the display surface. The sensor apertures 18a, 18b and 18c are formed of a material that is capable of passing light in the sensor wavelength range (signal light wavelength range). For example, the sensor apertures 18a, 18b and 18c may be formed of an infrared transparent filter that absorbs light in wavelengths outside the infrared range. The infrared transparent filter minimizes noise light entering the photodiodes D1, D2 and D3. The infrared transparent filters may be made of the same resin filter as the color filters 23r, 23g and 23b. For example, an infrared transparent filter or a color filter may be formed of a negative photosensitive resist including a base resin, such as an acrylic resin or a polyimide resin, with a pigment or carbon dispersed therein.

At the TFT substrate 100, a pixel circuit including a photosensor assembly FS is provided in a location corresponding to a set of color filters 23r, 23g and 23b that are each included in a subpixel, provided on the glass substrate 14b. Specifically, the photosensor assembly FS includes photodiodes D1, D2 and D3 provided on the glass substrate 14a. The photodiodes D1, D2 and D3, which exemplify the light receivers of the photosensor assembly FS, are arranged in one direction with a pitch equivalent to that of the color filters 23r, 23g and 23b included in a set of subpixels in the display region. Light-blocking layers 16a, 16b and 16c are provided between the photodiodes D1, D2 and D3 and the glass substrate 14a. The light-blocking layers 16a, 16b and 16c exemplify shields provided to prevent light emitted from the backlight 10 from directly affecting operations of the photodiodes D1, D2 and D3.

Further provided on the glass substrate 14a are: a thin-film transistor M1, a gate line G, a source line S, and other data signal lines that constitute the pixel circuit. Provided above the thin-film transistor M1, gate line G and source line S are pixel electrodes 19r, 19g and 19b connected to the thin-film transistor M1 via a contact hole. The pixel electrodes 19r, 19g and 19b are provided in locations opposite the color filters 23r, 23g and 23b. An oriented film 20a is provided above the pixel electrodes 19r, 19g and 19b.

As shown in FIG. 4B, sensor apertures 18a, 18b and 18c are provided above the photodiodes D1, D2 and D3, respectively. The sensor apertures 18a, 18b and 18c may be filled with, in addition to the infrared transparent filter discussed above, another wavelength selection filter or a white color filter, for example. Further, the sensor apertures 18a, 18b and 18c may be filled with color filters for the three colors, i.e. R, G and B, in order to implement color scanner functionality.

As indicated by the solid arrow X1 shown in FIG. 4C, an infrared light beam emitted from the backlight 10 exits the liquid crystal panel surface, is reflected from an object to be detected K, passes through the sensor aperture 18b and enters the photodiode D2. This incident light beam provides signal light for the photodiode D2. Since the sensor aperture 18b is filled with an infrared transparent filter, the components of the light beam entering the sensor aperture 18b other than infrared light are blocked. Thus, noise components from external light are eliminated. As a result, the S/N ratio is improved.

In the present embodiment, the sensor apertures 18a, 18b and 18c are arranged in one direction. Out of the sensor apertures 18a, 18b and 18c arranged in one direction, the outer sensor apertures, 18a and 18c, are shifted toward the center of the photosensor assembly FS (one photosensor unit). Specifically, the photodiode D1 and the sensor aperture 18a are positioned in such a way that the line running through the center of the sensor aperture 18a and perpendicular to the substrate 100 (i.e. the center line c1) is located inward of the center line k1 of the photodiode D1. Similarly, the photodiode D3 and the sensor aperture 18c are positioned in such a way that the center line c3 for the sensor aperture 18c is located inward of the center line k3 for the photodiode D3. The photodiode D2 and the sensor aperture 18b are positioned in such a way that the center line k2 for the middle photodiode D2 is located in the same position as the center line c2 for the sensor aperture 18b located above.

Thus, the outer sensor apertures 18a and 18c are displaced inward relative to the receivers (i.e. the photodiodes D1 and D3) located below. This reduces the difference between the area of incident light received by the photodiodes D1, D2 and D3 combined that are included in one photosensor assembly FS and the area of incident light received by a single photodiode of the photosensor assembly FS. As a result, unnecessary light is removed, leading to improved resolution.

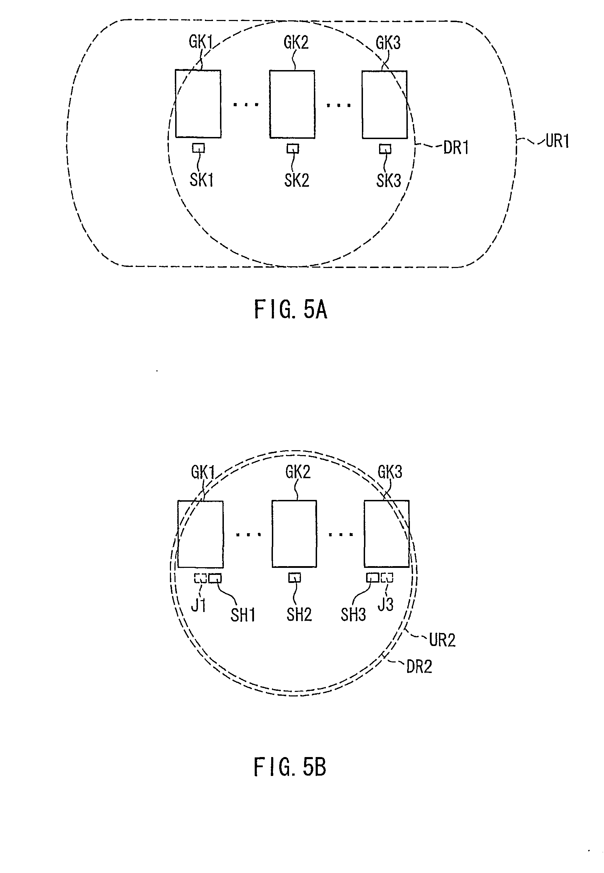

FIGS. 5A and 5B each illustrate the light reception area of one photosensor assembly and the light reception area of one light receiver in that photosensor assembly. FIG. 5A illustrates an exemplary arrangement of sensor apertures SK1, SK2 and SK3 and subpixel apertures GK1, GK2 and GK3, as viewed from the display surface, where no sensor aperture or receiver is displaced. FIG. 5B illustrates an exemplary arrangement of sensor apertures SH1, SH2 and SH3 and subpixel apertures GK1, GK2 and GK3, as viewed from the display surface, where the outer sensor apertures are shifted inward relative to their respective receivers.

In the implementation shown in FIG. 5A, each receiver (for example, a photodiode) is provided to overlie one of the sensor apertures SK1, SK2 and SK3 in the direction perpendicular to the display surface, i.e. provided directly below the aperture. These receivers are contained in one photosensor unit (photosensor assembly). That is, one photosensor unit is provided for two or more subpixels. In FIG. 5A, the dotted line DR1 indicates the area of incident light received by the receiver below the middle sensor aperture SK2 via the sensor aperture SK2. In other words, the dotted line DR1 indicates the light reception area of one receiver. The dotted line UR1 indicates the area of incident light received by the receivers combined provided below the sensor apertures SK1, SK2 and SK3. In other words, the dotted line UR1 indicates the light reception area of one photosensor unit (photosensor assembly) containing a plurality of receivers. Thus, the light reception area of the entire photosensor unit (UR1) is wider than the light reception area of one receiver (DR1). In this way, the light reception area of one photosensor unit is increased, leading to decreased resolution.

FIG. 5B also shows an exemplary arrangement where one photosensor unit (photosensor assembly) is provided for two or more subpixels. In the implementation shown in FIG. 5B, out of the sensor apertures SH1, SH2 and SH3 arranged in one direction, the outer ones SH1 and SH3 are provided in locations that are shifted inward relative to the light receivers J1 and J2 provided below. Thus, the light reception area of the entire photosensor unit, indicated by the dotted line UR2, is generally the same as that of one receiver, indicated by the dotted line DR2. Thus, shifting the outer sensor apertures SH1 and SH3 toward the center (i.e. displacing the sensor aperture Sh1 or SH3 at one end or the other end of the row of the sensor apertures SH1, SH2 and SH3 toward the other end or the one end, respectively) will make the light reception area of one photosensor unit more similar to the light reception area of one subpixel, thereby improving resolution.

### Specific Implementation 1

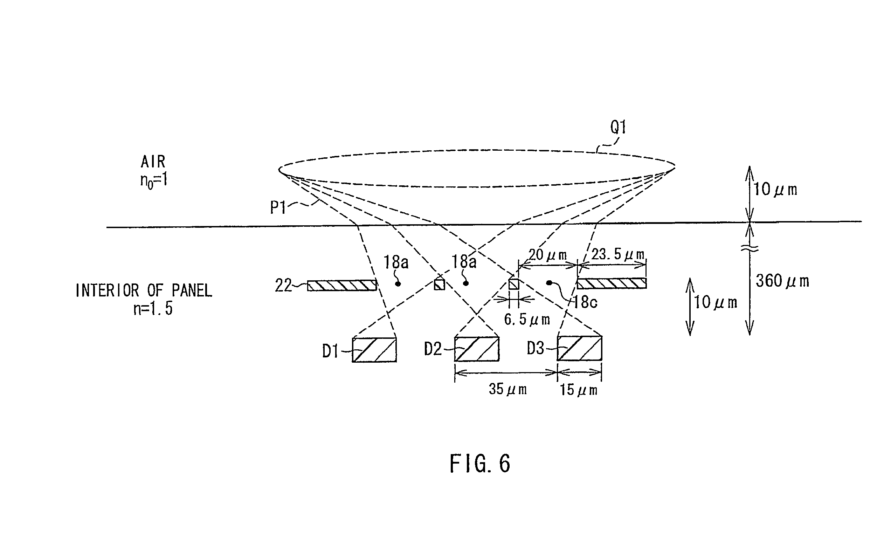

FIG. 6 is a cross sectional view of the display device illustrating a set of sensor apertures and a set of light receivers. FIG. 6 shows a cross sectional view of the display device with one exemplary arrangement of the sensor apertures 18a to 18c and the light receivers (photodiodes D1, D2 and D3) along line X2-X'2 of FIG. 4A. In the implementation shown in FIG. 6, the conditions for arrangement are as listed below. It should be noted that the conditions below are merely exemplary and the present invention is not limited to the same.
- one photosensor unit: 3 light receivers (photodiodes);
- size of a light receiver: 15×15 µm;
- size of a sensor aperture: 20×20 µm;
- light receiver pitch: 35 µm;
- sensor aperture pitch: 26.5 µm;
- distance between light receivers and sensor apertures: 10 µm;
- distance between light receivers and the panel surface: 360 µm; and
- distance between the panel surface and an object to be measured: 10 µm.

In the implementation shown in FIG. 6, the photodiodes D1, D2 and D3 in the photosensor assembly are arranged in the same direction as the subpixels with a pitch that is equivalent to that of the subpixels (specifically, the color filters 23r, 23g and 23b). In the present implementation, the pitch of the photodiodes D1, D2 and D3 is equal to that of the subpixels (specifically, color filters 23r, 23g and 23b). The pitch of the sensor apertures 18a, 18b and 18c (26.5 µm) is smaller than that of the photodiodes D1, D2 and D3 (35 µm). The photodiode D2 is located directly below the sensor aperture 18b. Thus, the outer sensor apertures 18a and 18c are located in positions that are shifted inward relative to the photodiodes D1 and D3, respectively.

Preferably, the portions of the light shield outside the outer sensor apertures 18a and 18c (black matrix 22) extend outward to such an extent that no light except through the sensor apertures 18a, 18b and 18c enters the photodiodes D1, D2 and D3. Specifically, only the outer sensor apertures 18a and 18c are shifted inward and the outer edges of the light shield (black matrix 22) are preferably not shifted but are fixed. In the implementation shown in FIG. 6, the width of the portions of the black matrix outside the outer sensor apertures 18a and 18c is 23.5 µm.

The dotted lines P1 shown in FIG. 6 indicate the area of light to be received by each of the photodiodes D1, D2 and D3. The ellipse Q1 indicates the area of light to be captured by one photosensor assembly (photosensor unit). The area of light to be captured by one photosensor unit is substantially the same as the area of light to be captured by one photodiode.

Under the above conditions, when an object to be measured is located 10 µm above the panel, given that the refractive index of air outside the panel is no=1 and the refractive index inside the panel is n=1.5, the photodiodes D1, D2 and D3 combined receive light in an area of approximately 57000 µm².

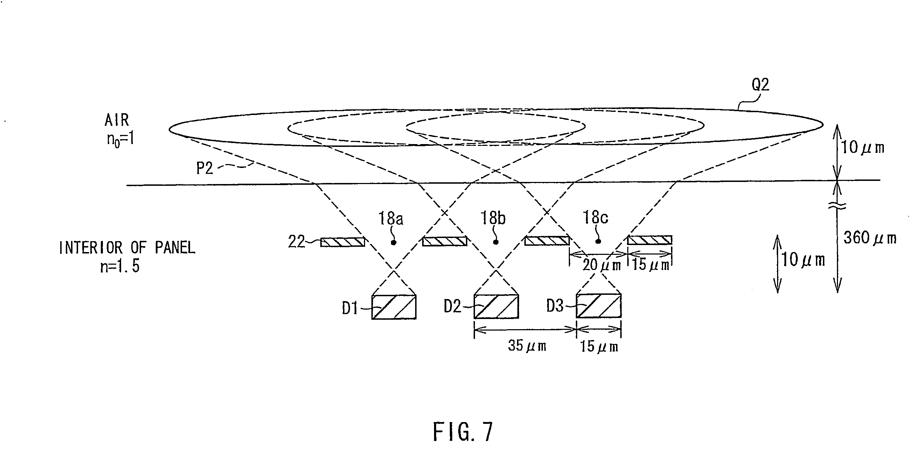

In contrast, FIG. 7 is a cross sectional view of the display device illustrating an implementation where the outer sensor apertures 18a and 18c are not shifted inward. In the implementation shown in FIG. 7, the pitch of the sensor apertures 18a, 18b and 18c is equal to that of the photodiodes D1, D2 and D3, i.e. 35 µm. In the implementation shown in FIG. 7, the photodiodes D1, D2 and D3 combined receive light in an area of approximately 63000 µm². The dotted line P2 shown in FIG. 7 indicates the area of light to be captured by each of the photodiodes D1, D2 and D3. The ellipse Q2 indicates the area of light to be captured by one photosensor unit. The area of light to be captured by one photosensor unit is larger than the area of light to be captured by one photodiode. Thus, compared with the implementation shown in FIG. 7, the implementation shown in FIG. 6 removes about 10% of unnecessary light, thereby improving resolution.

### Specific Implementation 2

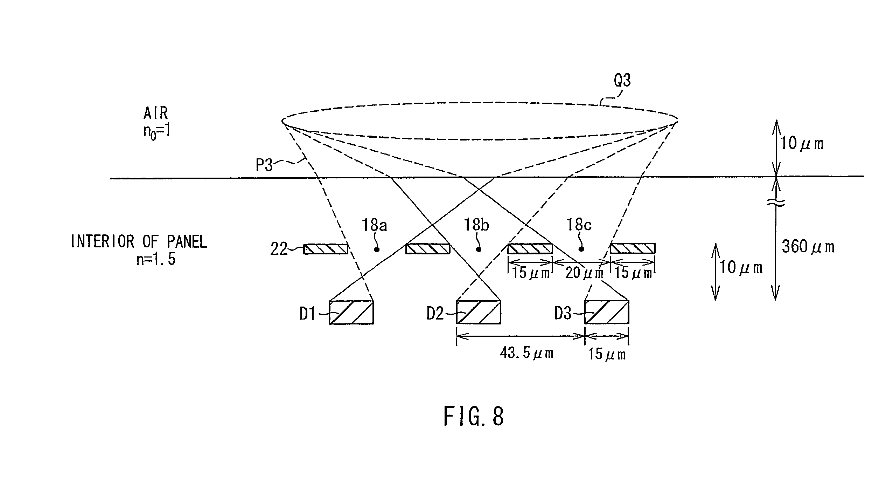

FIG. 8 is a cross sectional view of another implementation illustrating a set of sensor apertures and a set of light receivers. FIG. 8 shows a cross sectional view of the display device with another exemplary arrangement of the sensor apertures 18a, 18b and 18c and the light receivers (photodiodes D1, D2 and D3) along line X2-X'2 of FIG. 4A. In the implementation shown in FIG. 8, the conditions for arrangement are as listed below. It should be noted that the conditions below are merely exemplary and the present invention is not limited to the same.
- one photosensor unit: 3 light receivers (photodiodes);
- size of a light receiver: 15×15 µm;
- size of a sensor aperture: 20×20 µm;
- light receiver pitch: 43.5 µm;
- sensor aperture pitch: 35 µm;
- distance between light receivers and sensor apertures: 10 µm;
- distance between light receivers and the panel surface: 360 µm; and
- distance between the panel surface and an object to be measured: 10 µm.

In the implementation shown in FIG. 8, the photodiodes D1, D2 and D3 in the photosensor assembly are arranged in the same direction as the subpixels with a pitch that is equivalent to that of the subpixels (specifically, the color filters 23r, 23g and 23b). In the present implementation, the pitch of the sensor apertures 18a, 18b and 18c is equal to that of the subpixels (specifically, color filters 23r, 23g and 23b). The pitch of the photodiodes D1, D2 and D3 (43.5 µm) is larger than that of the sensor apertures 18a, 18b and 18c (35 µm). The photodiode D2 is located directly below the sensor aperture 18b. Thus, the outer photodiodes D1 and D3 are located in positions that are shifted outward from the center relative to the sensor apertures 18a and 18c, respectively.

The dotted lines P3 shown in FIG. 8 indicate the area of light to be received by the photodiodes D1, D2 and D3. The ellipse Q3 indicates the area of light to be captured by one photosensor assembly (photosensor unit). The area of light to be captured by one photosensor unit is substantially the same as the area of light to be captured by one photodiode. Under the above conditions, when an object to be measured is located 10 µm above the panel, given that the refractive index of air outside the panel is no=1 and the refractive index inside the panel is n=1.5, the photodiodes D1, D2 and D3 combined receive light in an area of approximately 57000 µm². Compared with the implementation in shown FIG. 7, the implementation shown in FIG. 8 removes about 10% of unnecessary light, thereby improving resolution.

Thus, Implementations 1 and 2 have illustrated one photosensor assembly (photosensor unit) including three light receivers (photodiodes); however, one photosensor assembly may include more light receivers, or just two light receivers. Increasing the number of light receivers per photosensor unit generally removes greater amounts of unnecessary light. This results in further improvement in resolution.

The above implementations have illustrated the outermost sensor apertures shifted inward relative to the light receivers; however, the sensor apertures that are to be shifted need not be limited to the outermost ones. For example, all the sensor apertures located outward of the center of the photosensor assembly (the middle point of the straight line connecting the centers of the light receivers located at the ends of the row of light receivers) may be shifted.

### Second Embodiment

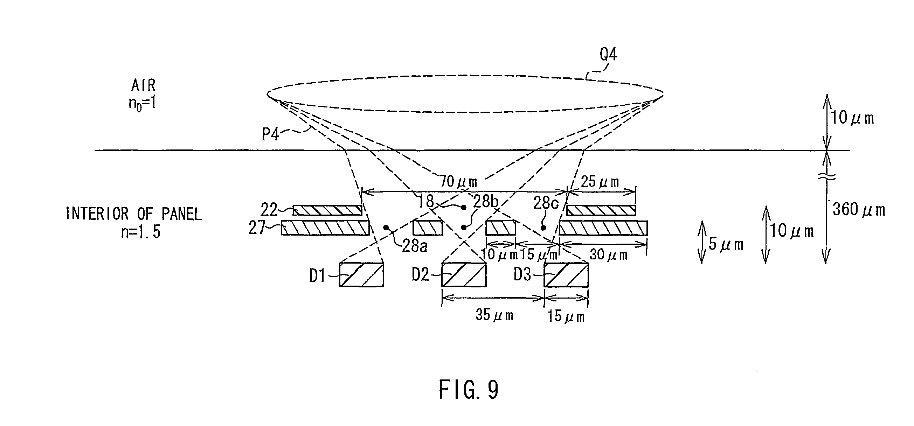

FIG. 9 is a cross sectional view of a liquid crystal display device as a display device according to a second embodiment, illustrating a set of light receivers and a set of sensor apertures. FIG. 9 shows an arrangement of one photosensor assembly, i.e. one photosensor unit. In the implementation shown in FIG. 9, the photosensor assembly includes three light receivers (in this implementation, photodiodes D1, D2 and D3 as examples) arranged in one direction and three sensor apertures formed above. The portions other than those shown in FIG. 9 may be the same as those shown in FIGS. 1 to 4 of the first embodiment.

As shown in FIG. 9, the present embodiment provides a metal layer 27 between a black matrix 22 and light receivers D1, D2 and D3. One aperture 18 is formed in the black matrix 22 for one photosensor unit. Sensor apertures 28a, 28b and 28c are provided in the metal layer 27. Opening is controlled by the sensor apertures 28a, 28b and 28c. That is, sensor apertures 28a, 28b and 28c, each having a smaller area than the aperture 18, are formed in the metal layer 27 to restrict light entering the aperture 18 of the black matrix 22. The sensor apertures 28a, 28b and 28c are provided above the photodiodes D1, D2 and D3, respectively. The sensor apertures 28a, 28b and 28c and the photodiodes D1, D2 and D3 correspond to the color filters 23r, 23g and 23b (see FIGS. 4A and 4B) included in the red, green and blue subpixels, respectively, and are arranged in the same direction as the color filters 23r, 23g and 23b. The sensor apertures 28a and 28c are provided in locations that are shifted inward relative to the diodes D1 and D3, respectively, provided below them.

The metal layer 27, in which the sensor apertures 28a, 28b and 28c are to be formed, may be provided in the TFT substrate 100 or in the counter substrate 101. If they are provided in the TFT 100, for example, data signal lines may also serve as at least part of the metal layer in which the sensor apertures are to be formed.

Thus, forming sensor apertures 28a, 28b and 28c in the metal layer 27 provided between the black matrix 22 and the photodiodes D1, D2 and D3 results in the sensor apertures 28a, 28b and 28c located closer to the photodiodes D1, D2 and D3. As a result, influence of noise light that is obliquely incident on the photodiodes D1, D2 and D3 may be minimized. Further, if the metal layer 27 with the sensor apertures 28a, 28b and 28c is provided in the TFT substrate 100, influence of misalignment (position offset) between the substrates 100 and 101 developing during the step of attaching the TFT substrate 100 to the counter substrate 101 may be eliminated. Thus, incident light may be controlled more precisely than in an implementation where sensor apertures are only provided in the counter substrate 101.

In the implementation shown in FIG. 9, the conditions for arrangement are as listed below. It should be noted that the conditions below are merely exemplary and the present invention is not limited to the same.
- one photosensor unit: 3 light receivers (photodiodes);
- size of a light receiver: 15×15 µm;
- size of a sensor aperture (metal layer): 15×15 µm;
- size of a sensor aperture (black matrix layer): 20×20 µm;
- light receiver pitch: 35 µm;
- sensor aperture pitch: 25 µm;
- distance between light receivers and sensor apertures (metal layer): 5 µm;
- distance between light receivers and sensor apertures (black matrix layer): 10 µm;
- distance between light receivers and the panel surface: 360 µm;
- distance between the panel surface and an object to be measured: 10 µm; and
- aperture pitch in the black matrix layer: 95 µm.

In the implementation shown in FIG. 9, the photodiodes D1, D2 and D3 in the photosensor assembly are arranged in the same direction as the subpixels with a pitch that is equivalent to that of the subpixels (specifically, the color filters 23r, 23g and 23b) (see FIGS. 4A and 4B). In the present implementation, the pitch of the photodiodes D1, D2 and D3 is equal to that of the subpixels (specifically, color filters 23r, 23g and 23b). The pitch of the sensor apertures 28a, 28b and 28c (25 µm) is smaller than that of the photodiodes D1, D2 and D3 (35 µm). The photodiode D2 is located directly below the sensor aperture 28b. Thus, the outer sensor apertures 28a and 28c are located in positions that are shifted inward relative to the photodiodes D1 and D3, respectively. Preferably, the portions of the metal layer 27 that are located outside the outer sensor apertures 28a and 18c extend outward to such an extent as to prevent external light except through the sensor apertures 28a, 28b and 28c from entering the diodes.

The dotted lines P4 shown in FIG. 9 indicate the area of light to be received by the photodiodes D1, D2 and D3. The ellipse Q4 indicates the area of light to be captured by one photosensor assembly (photosensor unit). The area of light to be captured by one photodiode is substantially the same as the area of light to be captured by one photosensor assembly.

Under the above conditions, when an object to be measured is located 10 µm above the panel, given that the refractive index of air outside the panel is no=1 and the refractive index inside the panel is n=1.5, the photodiodes D1, D2 and D3 combined receive light in an area of approximately 57000 µm².

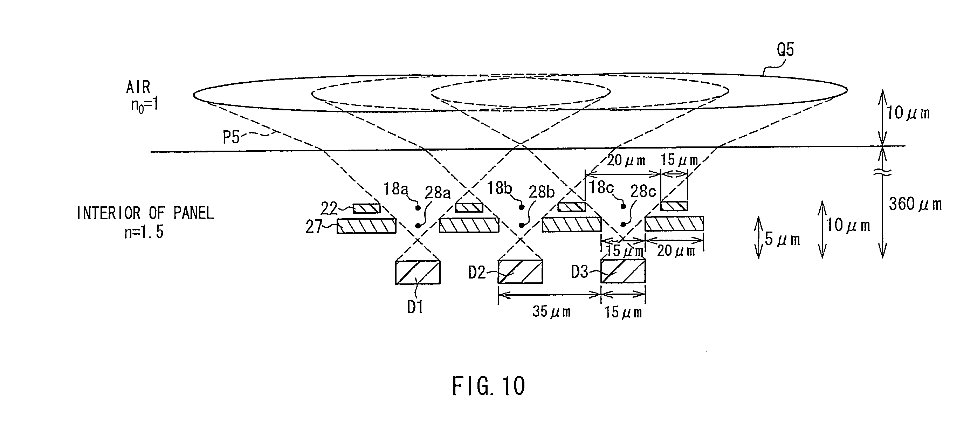

In contrast, FIG. 10 is a cross sectional view of the display device illustrating an implementation where the outer sensor apertures 28a and 28c are not shifted inward. In the implementation shown in FIG. 10, the pitch of the sensor apertures 28a, 28b and 28c is equal to that of the photodiodes D1, D2 and D3, i.e. 35 µm. Further, apertures 18a, 18b and 18c formed in the black matrix 22 are provided above the photodiodes D1, D2 and D3, respectively. The pitch of the apertures 18a, 18b and 18c is 35 µm. In the implementation shown in FIG. 10, the photodiodes D1, D2 and D3 combined receive light in an area of approximately 63000 µm². The dotted lines P5 shown in FIG. 10 indicate the area of light to be captured by each of the photodiodes D1, D2 and D3. The ellipse Q5 indicates the area of light to be captured by one photosensor unit.
The area of light to be captured by one photosensor unit is larger than the area of light to be captured by one photodiode. Thus, compared with the implementation shown in FIG. 10, the implementation shown in FIG. 9 removes about 10% of unnecessary light, thereby improving resolution.

It should be noted that the above implementation has illustrated three light receivers (photodiodes) for one photosensor assembly; however, one photosensor assembly may include more light receivers, or just two light receivers.

Further, the first and second embodiments have illustrated light receivers and sensor apertures arranged in one direction; however, the present invention is not limited to arranging the light receivers and sensor apertures in one direction. Light receivers and sensor apertures may be arranged in two or more directions. In this case, the outer sensor apertures for each direction may be shifted inward relative to the light receivers below them.

### Third Embodiment

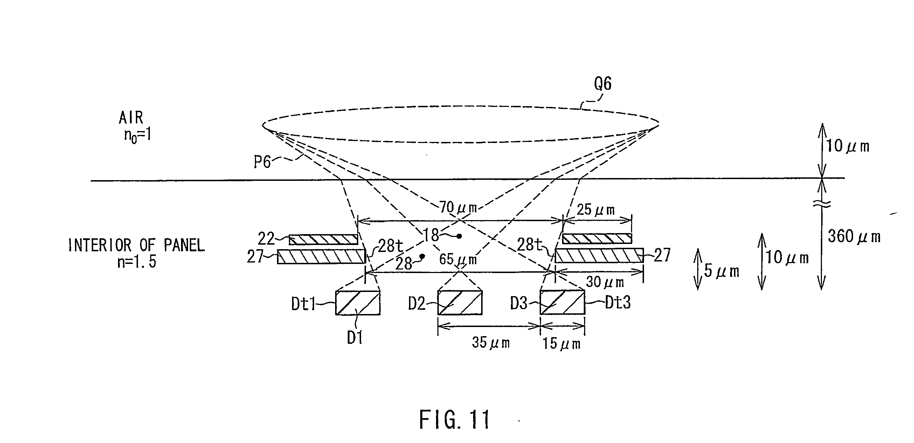

FIG. 11 is a cross sectional view of a liquid crystal display device as a display device according to a third embodiment, illustrating a set of light receivers and a set of sensor apertures. FIG. 11 shows the arrangement of one photosensor assembly, i.e. one photosensor unit. In the implementation shown in FIG. 11, the photosensor assembly includes three light receivers (in this present implementation, photodiodes D1, D2 and D3 as examples) arranged in one direction and one sensor aperture 18 formed above. The portions other than those shown in FIG. 11 may be the same as those shown in FIGS. 1 to 4 of the first embodiment.

As shown in FIG. 11, in the present embodiment, a metal layer 27 is provided between the black matrix 22 and the light receivers D1, D2 and D3. One aperture 18 is formed in the black matrix 22 for one photosensor unit. One sensor aperture 28 is provided in the metal layer 27. Opening is controlled by this aperture. That is, a sensor aperture 28 having a smaller area than the apertures 18 is formed in the metal layer 27 to restrict light entering the aperture 18 of the black matrix 22. The sensor aperture 28 is provided above the photodiodes D1, D2 and D3. The photodiodes D1, D2 and D3 correspond to the color filters 23r, 23g and 23b (see FIGS. 4A and 4B) included in the red, green and blue subpixels, respectively, and are arranged in the same direction as the color filters 23r, 23g and 23b. Out of the photodiodes D1, D2 and D3, the photodiodes D1 and D3 located outermost in the direction in which the photodiodes D1, D2 and D3 are arranged have outer edges D1t and D3t located outward of the edges 28t (hereinafter referred to as edges) of the sensor aperture 28 as viewed along a line in which the photodiodes D1, D2 and D3 are arranged.

In the implementation shown in FIG. 11, the conditions for arrangement are as listed below. It should be noted that the conditions below are merely exemplary and the present invention is not limited to the same.
- one photosensor unit: 3 light receivers (photodiodes);
- size of a light receiver: 15×15 µm;
- size of a sensor aperture (metal layer): 65×15 µm;
- size of a sensor aperture (black matrix layer): 70×20 µm;
- light receiver pitch: 35 µm;
- distance between light receivers and a sensor aperture (metal layer) 5 µm;
- distance between light receivers and a sensor aperture (black matrix): 10 µm;
- distance between light receivers and the panel surface: 360 µm; and
- distance between the panel surface and an object to be measured: 10 µm.

In the implementation shown in FIG. 11, the photodiodes D1, D2 and D3 in the photosensor assembly are arranged in the same direction as the subpixels, with a pitch that is equivalent to that of the subpixels (specifically, the color filters 23r, 23g and 23b) (see FIGS. 4A and 4B). Out of the photodiodes D1, D2 and D3, the photodiodes D1 and D3 located outermost in the direction in which the photodiodes D1, D2 and D3 are arranged have outer edges D1t and D3t located outward of the edges 28t of the sensor aperture 28. That is, the edges 28t of the sensor aperture 28 are shifted inward relative to the outer edges D1t and D3t of the photodiodes D1 and D3, respectively, which are located outward.

The arrangement above causes the light reception area of the outer photodiodes D1 and D3 to be shifted inward. Consequently, the light reception area of the outer photodiodes D1 and D3 combined and the light reception area of the photodiode D2 at the center may have a larger overlapping area. That is, the difference between the area of light to be captured by one photosensor assembly and the area of light to be detected by one photodiode in that photosensor assembly may be reduced. As a result, unnecessary light entering the sensors may be minimized, eventually improving resolution.

The dotted lines P6 shown in FIG. 11 indicate the area of light to be received by the photodiodes D1, D2 and D3. The ellipse Q6 indicates the area of light to be captured by one photosensor unit. The area of light to be captured by one photosensor unit is substantially the same as the area of light to be captured by one photodiode.

Under the above conditions, when an object to be measured is located 10 µm above the panel, given that the refractive index of air outside the panel is no=1 and the refractive index inside the panel is n=1.5, the photodiodes D1, D2 and D3 combined receive light in an area of approximately 57000 µm².

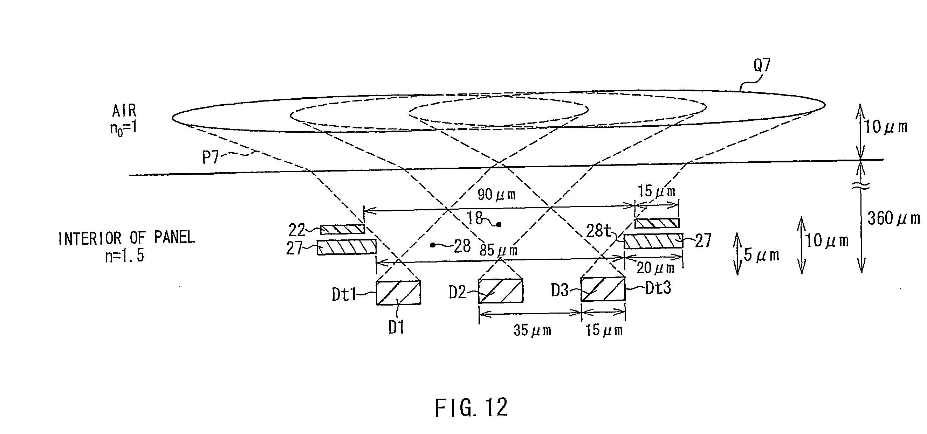

In contrast, FIG. 12 is a cross sectional view of the display device illustrating an implementation where the edges 28t of the sensor aperture 28 are not shifted inward relative to the outer edges D1t and D3t of the photodiodes D1 and D3, respectively. In the implementation shown in FIG. 12, the edges 28t of the sensor aperture 28 are located in positions that are substantially the same as the outer edges D1t and D3t of the outer photodiodes D1 and D3, respectively, as projected in the thickness direction of the liquid crystal panel. In the implementation shown in FIG. 12, the photodiodes D1, D2 and D3 combined receive light in an area of approximately 63000 µm². The dotted lines P7 shown in FIG. 12 indicate the area of light to be captured by each of the photodiodes D1, D2 and D3. The ellipse Q7 indicates the area of light to be captured by one photosensor unit. The area of light to be captured by one photosensor unit is larger than the area of light captured by one photodiode. It should be noted that the edges 28t of the sensor aperture 28 shown in FIG. 11 are shifted 10 µm inward compared with the edges 28t of the sensor aperture 28 shown in FIG. 12. Compared with the implementation shown in FIG. 12, the implementation shown in FIG. 11 removes about 10% of unnecessary light, thereby improving resolution.

The above implementation has illustrated three light receivers (photodiodes D1, D2 and D3) for one photosensor assembly; however, one photosensor assembly may include more light receivers, or just two light receivers.

Further, the above implementation has illustrated light receivers arranged in one direction; however, the present invention is not limited to arranging the light receivers in one direction. The light receivers may be arranged in two or more directions. In this case, the edges of the sensor aperture for each direction may be shifted inward relative to the outer edges of the outermost light receivers.

The light receivers in the first to third embodiments above are not limited to the photodiodes, and, for example, phototransistors may be used as light detection elements. Further, the display device of the present invention is not limited to a liquid crystal display device, and the present invention may be used in any display device that displays an image using a plurality of pixels.

### INDUSTRIAL APPLICABILITY

The present invention is industrially applicable in a display device having a sensor circuit in the pixel region of the TFT substrate.

## Claims

1. A photosensor-equipped display device including a plurality of photosensor assemblies in a display region that displays an image, wherein:
each of the photosensor assemblies includes:
a plurality of sensor apertures that allow light to enter the display device through a display surface for the image; and
a plurality of light receivers provided below the respective sensor apertures for receiving light entering the display device through the sensor apertures and converting the light into an electric signal, and
the plurality of sensor apertures and the plurality of light receivers are arranged in at least one direction, and
at least one of the plurality of sensor apertures that is located outward along the display region is displaced inward along the display region relative to at least one of the light receivers that is located below that at least one sensor aperture.

2. The display device according to claim 1, wherein the light receivers are arranged in at least one direction with a pitch equivalent to that of a plurality of subpixels provided in the display region, and
the sensor apertures are arranged with a pitch smaller than that of the receivers.

3. The display device according to claim 1, wherein the sensor apertures are arranged in at least one direction with a pitch equivalent to that of a plurality of subpixels provided in the display region, and
the light receivers are arranged with a pitch larger than that of the sensor apertures.

4. A photosensor-equipped display device including a plurality of photosensor assemblies in a display region that displays an image, wherein:
each of the photosensor assemblies includes:
a sensor aperture that allows light to enter the display device through a display surface for the image; and
a plurality of light receivers provided below the sensor aperture for receiving light entering the display device through the sensor aperture and converting the light into an electric signal, and
the plurality of receivers are arranged in at least one direction, and
an edge of the sensor aperture as viewed along the direction in which the light receivers are arranged is displaced inward along the display region relative to an edge located outward along the display region of at least one of the light receivers that is located outermost in the one direction.

5. The display device according to any one of claims 1 to 4, further comprising a metal layer provided between the display surface and the light receivers,
wherein the sensor apertures are formed in the metal layer.

6. The display device according to any one of claims 1 to 5, further comprising:
a light source provided opposite the display surface; and
a shielding unit provided between the light receivers and the light source for preventing light from the light source from directly reaching the light receivers.

7. The display device according to any one of claims 1 to 6, further comprising:
a display light source that emits light for image display; and
a sensor light source that emits light in a sensor wavelength range that is different from a wavelength range of light emitted by the display light source,
wherein a filter that passes light in the sensor wavelength range is provided on a path from each of the sensor apertures to each of the light receivers.

8. The display device according to any one of claims 1 to 7, further comprising:
a first substrate having a pixel circuit;
a liquid crystal layer; and
a second substrate on a side of the liquid crystal layer opposite the first substrate,
where the light receivers are provided on the first substrate.

9. A photosensor-equipped display device including a plurality of photosensor assemblies in a display region that displays an image, wherein:
each of the photosensor assemblies includes:
a plurality of sensor apertures that allow light to enter the display device through a display surface for the image; and
a plurality of light receivers provided below the respective sensor apertures for receiving light entering the display device through the sensor apertures and converting the light into an electric signal, and
the sensor apertures and the light receivers are arranged such that the light receivers included in each of the photosensor assemblies receive incident light in an identical area of the display surface.
